# EUROPÄISCHE PATENTANMELDUNG

(11) **EP 1 339 268 A2**
(43) Veröffentlichungstag der Anmeldung: **27.08.2003**
(21) Anmeldenummer: 03003548.9
(22) Anmeldetag: 17.02.2003
(51) Int. Cl.: H05B 41/28

(54) **Betriebsgerät für Lampen mit geregeltem SEPIC-Wandler**

(30) Priorität: 20.02.2002 DE 10207105
(71) Anmelder: Patent-Treuhand-Gesellschaft für elektrische Glühlampen mbH, 81543 München (DE)
(72) Erfinder: Weirich, Michael, Dr., 82008 Unterhaching (DE)

(57) **Zusammenfassung**

Die Erfindung betrifft ein neues Betriebsgerät für Lampen, insbesondere Niederdruckgasentladungslampen, in dem ein SEPIC-Wandler zum Laden eines Speichertransistors aus einer Wechselspannungsversorgung verwendet wird. Dabei wird der SEPIC-Wandler auf eine Ausgangsgröße als Regelgröße geregelt, wobei seine Betriebsfrequenz verändert wird. Vorzugsweise wird dabei nur die Einschaltzeit und nicht die Ausschaltzeit des Schalttransistors des SEPIC-Wandlers verändert.

## Beschreibung

### Technisches Gebiet

Die vorliegende Erfindung bezieht sich auf ein elektronisches Betriebsgerät zum Versorgen von Lampen, das seinerseits mit Wechselspannung versorgt wird.

Dies umfasst zum einen Betriebsgeräte für Einzellampen, zum anderen aber auch Betriebsgeräte, die mehrere Lampen versorgen können.

In vielen solcher Betriebsgeräte muss aus der Wechselspannung ein Speicherkondensator aufgeladen werden, der nachfolgende Schaltungsteile mit Gleichspannung versorgt. Dazu kann die üblicherweise zwischen zwei Polaritäten oszillierende Wechselspannung gleichgerichtet werden und als unipolare Wechselspannung an den Kondensator angelegt werden. Allerdings hat dies den gravierenden Nachteil, dass der Kondensator aus der Wechselspannung nur dann geladen wird, wenn der momentane Spannungswert der Wechselspannung höher liegt als die an dem Kondensator anliegende Spannung. Es kommt also zu kurzzeitigen pulsartigen Aufladestößen in der Umgebung der Spannungsmaxima der Versorgungswechselspannung. Diese stoßartigen Aufladeströme enthalten ein regelmäßig unzulässig starkes Oberwellenspektrum. Zur Korrektur (sogenannte Leistungsfaktorkorrektur: power factor correction (PFC)) werden spezielle Wandlerschaltungen eingesetzt.

### Stand der Technik

Eine bekannte Bauform einer solchen Wandlerschaltung wird als Hochsetzer oder Hochsetzsteller bezeichnet. Ein Beispiel findet sich in der WO 96/03017. Diese Lösung hat den Vorteil guter Wirkungsgrade und lässt sich relativ preisgünstig und einfach realisieren. Sie hat allerdings zum einen den Nachteil, dass sie prinzipbedingt nur Gleichspannungen erzeugen kann, die größer als die Versorgungswechselspannungsamplitude sind. Zum zweiten erzeugen diese Wandler relativ starke Funkstörungen. Maßgeblich ist vor allem die prinzipbedingte untere Grenze für die Gleichspannung des Speicherkondensators, die im Hinblick auf die erforderliche Spannungsfestigkeit dieses Kondensators und der von ihm versorgten nachfolgenden Schaltungsteile und damit im Hinblick auf die Schaltungskosten sehr störend ist.

Demgegenüber kann bei einem sogenannten SEPIC-Wandler die Gleichspannung, mit der der Speicherkondensator aufgeladen wird, in relativ weiten Grenzen beliebig eingestellt werden und insbesondere auch kleiner sein als die Spannungsamplitude der Versorgungswechselspannung. Andererseits benötigt dieses Wandlerprinzip etwas mehr Bauteile. Bei dem SEPIC-Wandler ist vor allem der sogenannte lückende Betrieb von Interesse, bei dem die einzelnen Lade- und Entladephasen der in diesem Wandler vorgesehenen beiden Induktivitäten durch stromlose Zeiten getrennt sind. Der SEPIC-Wandler wird konventionell von einer festfrequenten Regelschaltung gesteuert. Es entfällt die Notwendigkeit des Nachfahrens der gewünschten Stromaufnahmeform durch das Tastverhältnis. Damit ist die Steuerschaltung des SEPIC-Wandlers grundsätzlich einfacher als bei dem zuvor beschriebenen Hochsetzsteller.

Beide Schaltungskonzepte sind dem Fachmann geläufig und müssen hier nicht im Einzelnen dargestellt werden. Zur Funktionsweise des SEPIC-Wandlers wird allerdings ergänzend auf die nachfolgende Beschreibung der Erfindung verwiesen.

### Darstellung der Erfindung

Der vorliegenden Erfindung liegt das technische Problem zugrunde, ein verbessertes elektronisches Betriebsgerät für Lampen mit einem SEPIC-Wandler bereit zu stellen. Erfindungsgemäß ist hierzu vorgesehen, dass das elektronische Betriebsgerät aufweist: einen Speicherkondensator, einen SEPIC-Wandler zum Laden des Speicherkondensators aus der Wechselspannung auf eine Gleichspannung bei mit einer Betriebsfrequenz im Wesentlichen der Wechselspannungsform nachgeführter Stromaufnahme des Betriebsgeräts und eine Regelschaltung zum Regeln des SEPIC-Wandlers auf eine Ausgangsgröße, dadurch gekennzeichnet, dass die Regelschaltung bei dem Regeln die Betriebsfrequenz des SEPIC-Wandlers verändert.

Ausgestaltungen der Erfindung ergeben sich aus den abhängigen Ansprüchen.

Der wesentliche Aspekt der Erfindung liegt darin, den SEPIC-Wandler des Betriebsgerätes nicht festfrequent zu steuern, sondern dessen Betriebsfrequenz zum Regeln auf eine Ausgangsgröße des SEPIC-Wandlers als Regelgröße zu verändern. Die Ausgangsgröße könnte beispielsweise die Ausgangsspannung des SEPIC-Wandlers sein, mit der der Speicherkondensator aufgeladen wird. Im Prinzip kommt jedoch auch eine andere Ausgangsgröße des Wandlers oder nachfolgender Schaltungsteile in Betracht.

Konventionellerweise wurde beim Regeln das Tastverhältnis verändert, die Frequenz jedoch festgehalten. Beispielsweise wurde bei sinkender Versorgungsspannungsamplitude (Netzspannungsschwankungen) die Einschaltzeit des Schalttransistors des SEPIC-Wandlers vergrößert und die Ausschaltzeit verkleinert, wobei die Gesamtperiode unverändert blieb. Damit konnte trotz Netzspannungsschwankungen eine konstante Ausgangsspannung erzielt werden.

Die Erfinder gehen jedoch davon aus, dass die festfrequente Ansteuerung des Schalttransistors im Hinblick auf die leitungsgebundenen Störungen des Betriebsgeräts sehr ungünstig ist. Daher soll erfindungsgemäß die Betriebsfrequenz des Schalttransistors bei der Regelung der Ausgangsgröße verändert werden, so dass sich die leitungsgebundenen Störungen im Zeitverlauf auf einen gewissen Frequenzbereich verteilen.

Vorzugsweise soll dabei die Einschaltzeit des Schalttransistors des SEPIC-Wandlers verändert werden. Damit kann also die Regelung über eine Veränderung der Einschaltzeit des Schalttransistors und die sich daraus ergebende Betriebsfrequenzveränderung erfolgen. Ferner soll wiederum vorzugsweise die Ausschaltzeit des Schalttransistors konstant bleiben. Dies hat den zusätzlichen Vorteil, dass die Ausschaltzeit so optimiert werden kann, dass der erfindungsgemäß bevorzugte lückende Betrieb gewährleistet ist. Vorzugsweise ist also die Einschaltzeit die (alleinige) Stellgröße.

Der lückende Betrieb setzt eine, wenn auch kurze, stromlose Phase (in einer zu dem Speicherkondensator seriellen Diode) zwischen den Lade- und Entladepulsen der Induktivitäten des SEPIC-Wandlers voraus. Die Entladepulse gehören zu der Ausschaltzeit des Schalttransistors. Da im Normalfall auf eine konstante Ausgangsspannung geregelt wird, ist das Entladeverhalten keinen wesentlichen Schwankungen unterworden, so dass die Ausschaltzeit zur Sicherstellung des lückenden Betriebs auf einen zeitlich unveränderlichen Optimalwert eingestellt werden kann.

Dieser Optimalwert sollte so gewählt werden, dass die Ausschaltzeit möglichst klein ist, jedoch noch einen lückenden Betrieb sicherstellt. Im günstigsten Fall spricht man hier von einem quasi-transienten Betrieb, der erfindungsgemäß vorzugsweise so gewählt wird, dass die stromlose Zeit am Ende der Ausschaltzeit vor einer neuen Einschaltphase des Schalttransistors höchstens 10 % der Periodendauer, also der reziproken Betriebsfrequenz des SEPIC-Wandlers, beträgt.

Andererseits kann mit der Einschaltzeit des Schalttransistors der Ladevorgang der Induktivitäten so angepasst werden, dass bei sich verändernden Ladebedingungen in Folge von Netzspannungsschwankungen oder ähnlichen Störungen dennoch eine im Wesentlichen konstante Ausgangsgröße, insbesondere Ausgangsspannung, zur Verfügung gestellt werden kann.

Neben der Vermeidung der leitungsgebundenen Störungen bei festfrequenter Steuerschaltung ergibt sich durch die Optimierung der Ausschaltzeit damit eine Optimierung der "Ausnutzung" der Induktivitäten. Für die Einschaltzeit kann ein von der niedrigsten zulässigen Versorgungsspannung und der Lampe abhängiger Maximalwert gewählt werden.

Die verwendete Regelschaltung ist vorzugsweise digital und regelt den SEPIC-Wandler zeitdiskret. Dabei liegen die Abstände zwischen den Regelvorgängen vorzugsweise bei mindestens einer halben Periode der Versorgungswechselspannung, wozu auf die Voranmeldung "Betriebsgerät für Lampe mit SEPIC-Wandler" vom 24.1.2001 der selben Anmelderin verwiesen wird. Diese Anmeldung trägt das Aktenzeichen 101 10 239.9.

Dabei wird kurz gesagt die Eigenschaft eines SEPIC-Wandlers ausgenutzt, dass im lückenden Betrieb bei einem von der Regelung auf die Ausgangsgröße abgesehen konstanten Tastverhältnis zwischen Einschaltzeit und Ausschaltzeit ein ausreichend guter Leistungsfaktor erzielt werden kann. Das Tastverhältnis wird dabei also nicht der momentanen Netzspannung nachgeführt, sondern lediglich nach der Ausgangsgröße als Regelgröße geregelt. Daher reichen Regelintervalle einer zeitdiskreten Regelung von mindestens der halben Netzperiode aus. Mit solchen Regelintervallen lässt sich die Versorgungswechselspannung nicht nachfahren. Der Vorteil liegt in den geringeren Anforderungen an die Regelschaltung und den damit erzielten Einsparmöglichkeiten.

Ein bevorzugter Anwendungsfall der Erfindung liegt darin, ein elektronisches Betriebsgerät für eine Mehrzahl Lampentypen zur Verfügung zu stellen. Dieses Betriebsgerät weist eine programmierbare Steuerschaltung mit einem Speicher mit Betriebsparametern für diese Lampentypen auf. Insbesondere enthält die programmierbare Steuerschaltung auch die Regelschaltung für die Steuerschaltung des SEPIC-Wandlers und kann diesen an die entsprechenden Parameter der Lampe anpassen, also beispielsweise auf die gewünschte Ausgangsspannung unter Berücksichtigung der Lampenimpedanz einstellen. Die Steuerschaltung des SEPIC-Wandlers kann dann in einer auf den spezifischen, von dem Betriebsgerät detektierten oder ihm bei Betriebsbeginn mitgeteilten Lampentyp angepassten Parametern etwa für die Ausschaltzeit, den Bereich wählbarer Einschaltzeiten und die Frequenz erfolgen. Insbesondere ist dabei bevorzugt, dass das Betriebsgerät bei Beginn des Betriebs mit einer neu angeschlossenen Lampe diese Lampe selbsttätig erkennt.

Ferner ist bevorzugt, dass das Betriebsgerät bei Betriebsbeginn eine selbsttätige Justage auf die spezifischen Parameter im Rahmen der üblichen Bauteilschwankungen vornimmt, die durch die bestückten Bauteile vorgegeben sind. Dadurch lassen sich die Anforderungen an die Bauteilauswahl in einem kostengünstigen Rahmen halten und gleichzeitig ein präziser optimierter Betrieb sicherstellen. Dieser Aspekt gilt im Übrigen sowohl für Mehrtypenbetriebsgeräte als auch für Betriebsgeräte, die nur für einen bestimmten Lampentyp ausgelegt sind.

Schließlich weist das Betriebsgerät in vielen Fällen einen Oszillator auf, der vorzugsweise von der selben Regelschaltung gesteuert wird, die auch den SEPIC-Wandler steuert. Insbesondere kann das gesamte Betriebsgerät von einem einzigen digitalen IC gesteuert werden.

Der bevorzugte Anwendungsbereich liegt bei Betriebsgeräten für Niederdruckgasentladungslampen. Die dabei verwendeten Oszillatoren sind vorzugsweise Halbbrückenoszillatoren mit Fremdsteuerung durch den erwähnten IC.

### Kurze Beschreibung der Zeichnungen

Im Folgenden werden die einzelnen Aspekte der Erfindung anhand eines Ausführungsbeispiels näher erläutert. Dabei offenbarte Einzelmerkmale können auch in anderen Kombinationen erfindungswesentlich sein. Vorsorglich wird ferner festgehalten, dass die vorstehende und die nachfolgende Beschreibung gleichermaßen im Hinblick auf ein Betriebsverfahren zu verstehen ist.
- Figur 1: zeigt ein schematisiertes Blockschaltbild eines erfindungsgemäßen Betriebsgeräts und
- Figur 2: verdeutlicht in einem Zeitdiagramm die Einschaltzeit und die Ausschaltzeit des Schalttransistors aus Figur 1.

### Bevorzugte Ausführung der Erfindung

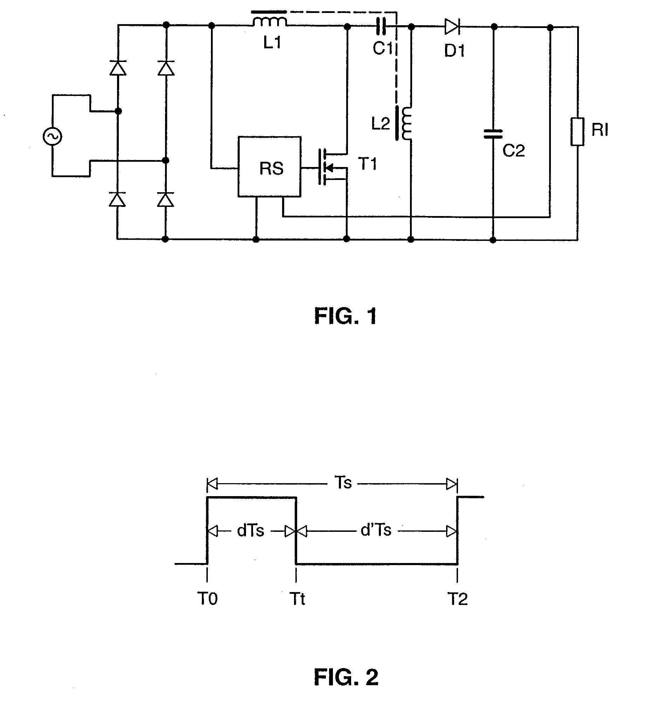

In Figur 1 ist ein erfindungsgemäßes Betriebsgerät als Ausführungsbeispiel dargestellt. Links erkennt man, dass eine Versorgungswechselspannung, beispielsweise eine gewöhnliche Haushaltsnetzspannung, über eine Diodengleichrichterbrücke gleichgerichtet wird. Damit liegt in der Figur auf dem oben horizontal verlaufenden Leitungsast ein gleichgerichtetes positives Potential und unten ein gleichgerichtetes negatives Potential, das in der Regel auf Masse gelegt wird. Die gleichgerichtete Wechselspannung bildet den Eingang eines SEPIC-Wandlers, der die Spulen (Induktivitäten) L1 und L2, den Kondensator C1, die Gleichrichterdiode D1 und den Schalttransistor T1 aufweist und von der Regelschaltung RS geregelt wird. An den rechts eingezeichneten Ausgang des SEPIC-Wandlers, also parallel zu einem Speicherkondensator C2, ist eine Last RI geschaltet, die mit einer von dem Kondensator C2 zur Verfügung gestellten Gleichspannung versorgt wird. Bei der Last RI handelt es sich um einen üblichen Halbbrückenoszillator mit zwei Schalttransistoren zur Erzeugung einer hochfrequenten Wechselspannung, mit der eine Niederdruckgasentladungslampe betrieben werden kann. Da solche Schaltungen Stand der Technik und allgemein bekannt sind, ist die Last hier lediglich durch einen Widerstand dargestellt.

Der Kondensator C2 dient als Speicherkondensator und muß von dem SEPIC-Wandler aus der gleichgerichteten Wechselspannung auf eine möglichst konstante Gleichspannung aufgeladen werden. Dabei soll die Stromaufnahme aus dem Netz möglichst störungsfrei dem sinusförmigen Verlauf der Netzspannung nachgeführt werden.

Durch einen alternierenden Schaltbetrieb des Schalttransistors T1 wird die Spule L1 im Einschaltzustand aus der gleichgerichteten Netzspannung auf einen bestimmten Strom aufgeladen und im Ausschaltzustand des Schalttransistors T1 in den Kondensator C1 entladen. Gleichermaßen wird die Spule L2 in den Einschaltzeiten des Schalttransistors T1 aufgeladen und in den Ausschaltzeiten in den Speicherkondensator C2 entladen. (Die Polung der Diode D1 ist zu beachten.) Dabei ergibt sich ein sogenannter lückender Betrieb, wenn die Ausschaltzeiten des Schalttransistors T1 ausreichend lang sind, damit der Strom in der Gleichrichterdiode D1 auf Null sinkt. Dabei bleibt im Mittel der Kondensator C1 im Wesentlichen auf dem Wert der momentanen gleichgerichteten Versorgungsspannung aufgeladen. Daraus ergibt sich wiederum, dass der Speicherkondensator C2 in den Ausschaltzeiten lediglich mit der durch die Spule L2 erzeugten Induktionsspannung aufgeladen wird. Durch ein entsprechendes Tastverhältnis, also Verhältnis zwischen den Einschaltzeiten und Ausschaltzeiten, und unter Berücksichtigung der Last RI lässt sich damit im Wesentlichen eine beliebige Gleichspannung an dem Kondensator C2 einstellen, die insbesondere kleiner als die Amplitude der Netzspannung sein kann. Bei dem Speicherkondensator C2 muss es sich also nicht notwendigerweise um einen besonders hochspannungsfesten Kondensator handeln. Der Kondensator C1 versorgt gewissermaßen für eine Entkopplung zwischen den beiden Spulen L1 und L2, so dass sich, im Gegensatz zum Hochsetzsteller, die durch die Spule L1 erzeugten Spannungen nicht zu der momentanen Netzspannung addieren.

Die Einschaltzeiten und Ausschaltzeiten ergeben zusammen eine Periodendauer und somit eine Betriebsfrequenz, die durch den Schaltbetrieb des Schalttransistors T1 und damit durch die Regelschaltung RS gegeben ist. Eine typische Betriebsfrequenz liegt im Bereich einiger zehn kHz bis etwa 200 kHz.

In Figur 2 sind die Schaltzustände symbolisiert. Dabei bedeutet dTₛ die Einschaltzeit und d'Tₛ die Ausschaltzeit. Beide addieren sich zu der Periodendauer Tₛ, die sich von einem Zeitpunkt T0 bis zu einem Zeitpunkt T2 erstreckt. Zum Zeitpunkt Tt öffnet der Schalttransistor T1, beendet damit die Einschaltzeit und die Ausschaltzeit beginnt. Der mehrfach erwähnte lückende Betrieb zeichnet sich dadurch aus, dass zumindest am Ende der Ausschaltzeit d'Tₛ, also kurz vor dem in Figur 2 eingezeichneten Zeitpunkt T2, ein stromloser Zustand der Gleichrichterdiode D1 entsteht. Vorzugsweise ist dieser stromlose Zustand möglichst kurz, im vorliegenden Fall im Bereich von 5-10 % der Periodenlänge Tₛ.

In Figur 1 ist zu erkennen, dass die Regelschaltung RS vier Anschlüsse aufweist, von denen zwei die gleichgerichtete Netzspannung am Ausgang der Gleichrichterbrücke abgreifen. Ein weiterer Anschluss misst die Ausgangsspannung, also die Gleichspannung an dem Speicherkondensator C2, die den Halbbrückenoszillator speist. Der vierte Anschluss steuert die Steuerelektrode des Schalttransistors T1, bei dem es sich entweder um einen MOSFET oder einen IGBT handelt. Die Regelschaltung RS regelt dabei den Schaltbetrieb des Schalttransistors T1 in Bezug auf eine Konstanz der Ausgangsspannung an dem Speicherkondensator C2 als Regelgröße. Die Stellgröße ist erfindungsgemäß die Einschaltzeit dTₛ oder anders ausgedrückt die Periodendauer Tₛ bei gleichzeitig konstanter Ausschaltzeit d'Tₛ.

Dabei wird die gewünschte Ausgangsspannung als Regelgröße vorgegeben durch eine Steuerschaltung des Gesamtbetriebsgeräts, die außerdem für den Betrieb des Halbbrückenoszillators zuständig ist. Diese Steuerschaltung verfügt über Parametersätze für verschiedene Lampentypen, die beim Anschließen einer Lampe durch Erkennen des Lampentyps und Auslesen der entsprechenden Parameter eingestellt werden. Dementsprechend wählt die Regelschaltung eine für den Lampentyp geeignete Ausgangsspannung. Außerdem kann dabei auf verschiedene Netzeingangsspannungen Rücksicht genommen werden, so dass es sich insgesamt um ein Weitbereichseingangs-Betriebsgerät handelt.

Durch das eingezeichnete Abgreifen der gleichgerichteten Netzspannung kann die Regelschaltung RS die maximal abgegebene Leistung begrenzen.

Im Übrigen wird für die Steuerschaltung mit der Regelschaltung RS ein sogenannter Mikrocontroller (programmierbare Steuerschaltung) verwendet, wobei sich die Regelung mit der Periodendauer Tₛ respektive der Einschaltzeit dTₛ als Stellgröße vergleichsweise einfach realisieren lässt.

Infolge der relativ großen Regelintervalle wegen der weitgehenden Frequenzkonstanz des SEPIC-Wandlerbetriebs (im Gegensatz zur Frequenznachführung beim Hochsetzsteller) ist der von dem Mikrocontroller zu leistende Rechenaufwand vergleichsweise gering.

Der Vorteil der Erfindung liegt zum einen darin, dass die bei Netzversorgung regelmäßig auftretenden Netzspannungsschwankungen zu entsprechenden Anpassungen der Betriebsfrequenz bzw. -periodendauer Tₛ führen und damit die leitungsgebundenen Störungen des Betriebsgeräts in der Frequenz modulieren.

Wenn die momentane Netzspannungsamplitude sinkt, so wird die Einschaltzeit dTₛ dementsprechend verlängert, um in den Spulen L1 und L2 den gleichen Strom zu erzielen. Umgekehrt wird bei steigender Netzspannungsamplitude die Einschaltzeit dTₛ vergrößert. Die Entladezeit innerhalb der Ausschaltzeit d'Tₛ bleibt dabei im Wesentlichen konstant.

Infolge der verringerten leitungsgebundenen Störungen bzw. deren Frequenzverschiebungen lässt sich der Aufwand für die Entstörung insgesamt deutlich verringern. Damit lassen sich die einschlägigen Normen erfüllen und gleichzeitig Einsparungen erzielen.

Zum zweiten kann die Ausschaltzeit d'Tₛ als feste Größe optimiert werden, wobei natürlich auf den entsprechenden Parametersatz des Lampentyps Rücksicht genommen wird, insbesondere auf die gewünschte Ausgangsspannung und Impedanz der Last RI. Durch die Regelung auf die Ausgangsspannung als Regelgröße sind nämlich die Entladevorgänge der beiden Spulen L1 und L2 während der Ausschaltzeiten d'Tₛ konstanten Bedingungen unterworden. Damit kann der lückende Betrieb "sehr knapp" eingestellt werden, nämlich als quasi-transienter Betrieb. Insofern müssen die Spulen L1 und L2 nicht überdimensioniert werden.

Die in Figur 1 eingezeichnete Kopplung der beiden Spulen hat für die Erfindung keine wesentliche Bedeutung und gehört zu den üblichen Maßnahmen bei der Optimierung von SEPIC-Wandlern. Die Kopplung dient insbesondere zur Funktentstörung und wird hier in ihren Einzelheiten nicht erläutert.

## Patentansprüche

1. Elektronisches Betriebgerät für Lampen, das zur Versorgung mit Wechselspannung ausgelegt ist und aufweist:
- einen Speicherkondensator (C2),
- einen SEPIC-Wandler (L1, L2, C1, T1, D1) zum Laden des Speicherkondensators (C2) aus der Wechselspannung auf eine Gleichspannung bei mit einer Betriebsfrequenz im Wesentlichen der Wechselspannungsform nachgeführter Stromaufnahme des Betriebsgeräts und
- eine Regelschaltung (RS) zum Regeln des SEPIC-Wandlers auf eine Ausgangsgröße,
**dadurch gekennzeichnet, dass** die Regelschaltung (RS) bei dem Regeln die Betriebsfrequenz des SEPIC-Wandlers (L1, L2, C1, T1, D1) verändert.

2. Betriebsgerät nach Anspruch 1, bei dem bei dem Regeln des SEPIC-Wandlers (L1, L2, C1, T1, D1) die in den Perioden der Betriebsfrequenz auftretende Einschaltzeit (dTs) eines Schalttransistors (T1) des SEPIC-Wandlers (L1, L2, C1, T1, D1) verändert wird.

3. Betriebsgerät nach Anspruch 2, bei dem bei dem Regeln des SEPIC-Wandlers (L1, L2, C1, T1, D1) die in den Perioden (Tₛ) der Betriebsfrequenz auftretende Ausschaltzeit (d'Tₛ) eines Schalttransistors (T1) des SEPIC-Wandlers (L1, L2, C1, T1, D1) konstant bleibt.

4. Betriebsgerät nach einem der vorstehenden Ansprüche, das zu einem quasi-transienten Betrieb des SEPIC-Wandlers (L1, L2, C1, T1, D1) mit in den Perioden (Tₛ) der Betriebsfrequenz auftretenden stromlosen Zeiten von jeweils höchstens 10 % der Periodendauer (Tₛ) ausgelegt ist.

5. Betriebsgerät nach einem der vorstehenden Ansprüche, bei dem die Regelschaltung (RS) eine Digitalschaltung ist und die Regelung der Betriebsfrequenz des SEPIC-Wandlers (L1, L2, C1, T1, D1) zeitdiskret erfolgt.

6. Betriebsgerät nach Anspruch 5, bei dem die Regelintervalle der zeitdiskreten Regelung zumindest so groß wie die halbe Periode der Wechselspannung sind.

7. Betriebsgerät nach einem der vorstehenden Ansprüche, das für eine Mehrzahl Lampentypen geeignet ist und eine programmierbare Steuerschaltung mit einem Speicher mit Betriebsparametern der Lampentypen aufweist, wobei die programmierbare Steuerschaltung die Regelschaltung zum Regeln des SEPIC-Wandlers mit umfasst.

8. Betriebsgerät nach Anspruch 7, das so ausgelegt ist, dass bei Betriebsbeginn eine selbsttätige Anfangseinstellung auf individuelle Parameter der bestückten Bauteile (L1, L2, C1, C2, T1, D1) erfolgt.

9. Betriebsgerät nach Anspruch 7 oder 8 mit einem Oszillator, der von der programmierbaren Steuerschaltung gesteuert wird und von dem Speicherkondensator (C2) mit Gleichspannungsleistung versorgt wird.

10. Betriebsgerät nach einem der vorstehenden Ansprüche, das zur Versorgung einer Niederdruckgasentladungslampe ausgelegt ist.
